Europäisches Patentamt

European Patent Office

Office européen des brevets

(19)

(11) Publication number: **0 051 493**

A2

## EUROPEAN PATENT APPLICATION

(21) Application number: **81305226.3**

(22) Date of filing: **03.11.81**

(51) Int. Cl.³: **F 02 C 3/30**
**F 02 C 3/36, F 02 C 6/18**

(30) Priority: **05.11.80 JP 155399/80**
**27.12.80 JP 188977/80**

(43) Date of publication of application:
**12.05.82 Bulletin 82/19**

(84) Designated Contracting States:
**CH DE FR GB IT LI SE**

(71) Applicant: **MITSUBISHI GAS CHEMICAL COMPANY, INC.**
**5-2, Marunouchi 2-chome Chiyoda-Ku Tokyo(JP)**

(72) Inventor: **Nakamura, Hiromi**
**12-17, Nishiyama 2-chome**
**Kashiwa-shi Chiba-ken(JP)**

(72) Inventor: **Sayama, Norio**
**15-6, Nishikubo-cho**
**Tokiwadaira Matsudo-shi Chiba-ken(JP)**

(74) Representative: **Coleman, Stanley et al,**
**MATHYS & SQUIRE 10 Fleet Street**
**London EC4Y 1AY(GB)**

(54) Heat exchanging system for an open internal combustion cycle.

(57) A heat·exchanging system for a heat engine wherein compressed air or gas including air as the main part thereof is used as combustion supporting gas, working medium gas or the like and heat recovery is carried out by means of mixture which is obtained by adding liquid phase water to the compressed air or the gas including air as the main part thereof, the heat exchanging system for the open internal combustion cycle comprising:

a multi-step air compressor;

intermediate cooling means, or both intermediate cooling means and water injecting means or water contacting means located at the intermediate output of the air compressor; and

liquid phase water injecting means or contacting means located at the last-step output of the air compressor;

the heat exchanging system for the open internal combustion cycle being characterized in that the liquid phase water which is mixed with the compressed gas by means of the injecting means or contacting means is used as intermediate cooling heat medium, or both intermediate cooling heat medium and water to be injected to the intermediate compressed air.

*Fig. 3*

- 1 -

# HEAT EXCHANGING SYSTEM FOR AN OPEN
## INTERNAL COMBUSTION CYCLE

The present invention relates to a novel method of heat recovery or a novel heat exchanging system for a heat engine, and more particularly, to a heat exchanging system wherein compressed air or gas including air as the main part thereof is used as the combustion supporting gas, working medium gas or the like and heat recovery is carried out by means of mixture which is obtained by adding liquid phase water to the compressed air or the gas including air as the main part thereof, the heat exchanging system for the open internal combuation cycle comprisin:;

a multi-step air compressor;

intermediate cooling means or both intermediate cooling means and water injecting means or water contacting means located at the intermediate output of the air compressor; and

liquid phase water injecting means or contacting means located at the last-step output of the air compressor;

the heat exchanging system for the open internal combustion cycle being characterized in that the liquid phase water which is mixed with the compressed gas by means of the injecting means or contacting means is used as intermediate cooling heat medium, or both intermediate cooling heat medium and water to be injected to the intermediate compressed air.

Thus, the present invention makes it possible to recover heat from a heat engine with high thermal efficiency by combining a novel heat exchanging system and cooling of intermediate compressed air at the intermediate step wherein the partial pressure of the steam in the compressed air is
increased by liquid phase water which is used as the intermediate cooling medium, and this steam functions as a substantial part of the motive fluid so that the quantity of
air to be compressed is reduced which means less energy is
required for compression and thermal effectiveness is improved.
Therefore, the present invention can be considered as a heat
exchanging system for heat engine wherein an open internal
combustion cycle such as gas turbine combines with the Rankine
cycle which is used generally in a closed cycle, and these
two cycles are carried out at the same time.

As described above, although in the present invention
the gas turbine cycle and the Rankine cycle are integrated,
we will explain the present invention using only a gas turbine
cycle as an example in order to make it easy to understand.

In the conventional gas turbine cycle, heat recovery
of the exhaust gas from the turbine is performed by means of
preheating of air, recovery of vaporized heat medium by use
of a boiler which uses exhaust heat, or recovery of refrigeration energy by use of absorption refrigeration cycle.  Further,
there is a method as a one kind of the preheating of air
wherein heat recovery is performed by means of mixture of
air and steam which is obtained by adding water to compressed
air.

The following United States patents comprise the
closest known prior art:

| 2,095,991 | 2,115,112 | 2,115,338 |
| 2,678,532 | 2,869,324 | |

In addition to the above patents there are also some
reports such as "GAS TURBINE WITH HEAT EXCHANGER AND WATER
INJECTION IN THE COMPRESSED AIR" written by Gasparovic, N
et al [Combustion v44 n6 Dec. 1972 Page 32-40/ (this will be
referred hereater to as "report A"), and Combustion v45 n6
Dec. 1973 Page 6-16/ (this will be referred to hereafter as
"report B").]

In these publications, there is some description about
the injection of water into compressed gas, or the injection
of water into both intermediate compressed gas and compressed gas. According to the reports A and B, significant improvement can be obtained by the injection of water, but the improvement of thermal efficiency is only 10% in comparison with the conventional method under the preferred conditions. Such improvement of thermal efficiency is not sufficient and, therefore, from the view point of total design of working plant, taking practicality into consideration, the method is inferior to the so-called combined cycle of gas turbine-steam turbine. Under the recent significant rise in fuel prices (about 20 times/10 years) the development of working plant is mainly directed to the actualization of combined cycle of the gas turbine-steam turbine in order to improve the thermal efficiency greatly.

The present invention is an application of the phenomenon in which the amount of transformation from Excergy to Anergy depends largely on the mixing conditions in the heat exchanging system using a mixture of air/steam, and is derived from the discovery that adding water into the gas turbine cycle and evaporation of water are performed with little increase in Anergy.

The object of the present invention is to provide a heat exchanging system for an open internal combustion cycle with high thermal efficiency.

The present invention accomplishes the above mentioned objects by using a system wherein compressed air or gas including air as the main part thereof is used as combustion supporting gas, working medium gas or the like and heat recovery is carried out by means of a mixture which is obtained by adding liquid phase water to the compressed air or the gas including air as the main part thereof, the heat exchanging system for the open internal combustion cycle comprising:

a multi-step air compressor;

intermediate cooling means, or both intermediate cooling means and water injecting means or water contacting means located at the intermediate output of the air compressor; and

liquid phase water injecting means or contacting means located at the last-step output of the air compressor;

the heat exchanging system for the open internal combustion cycle being characterized in that the liquid phase water which is mixed with the compressed gas by means of the injecting means or contacting means is used as intermediate cooling heat medium, or both intermediate cooling heat medium and water to be injected to the intermediate compressed air.

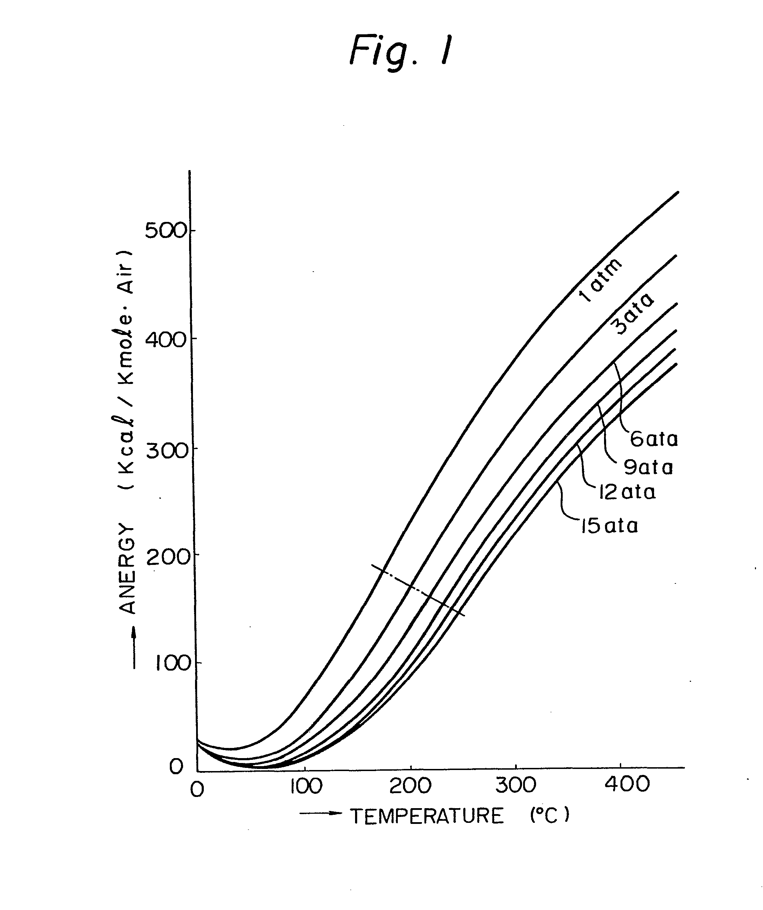

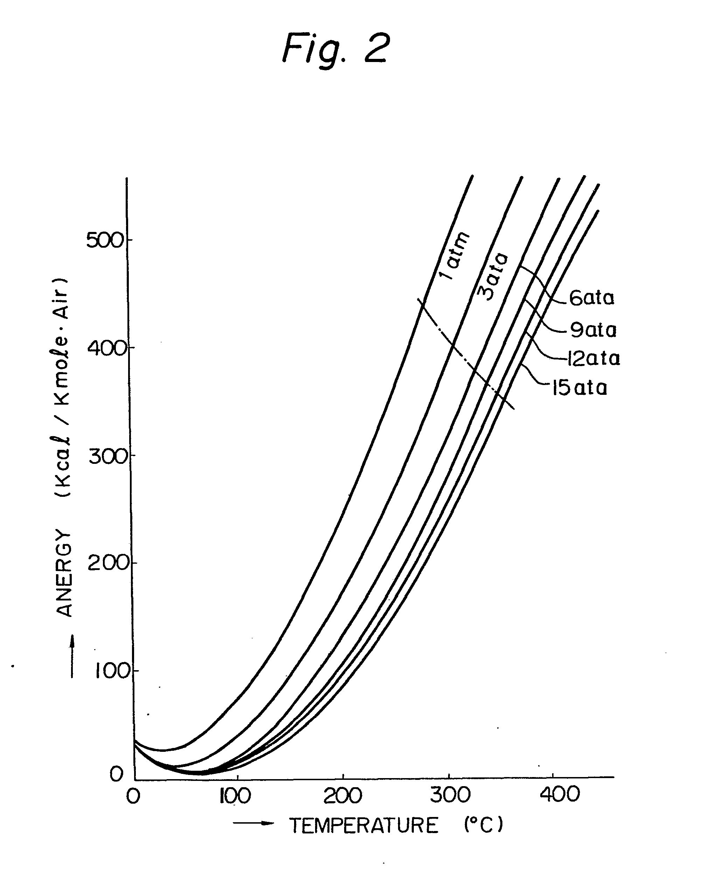

Figs. 1 and 2 are graphs showing increase in Anergy when water is added to compressed air at an ambient temperature of 20°C using pressure of air as a parameter.

Thus, Fig. 1 is a graph showing the relation between the compressed air temperature (the X-axis) and the Anergy (the Y-axis) when 0.1 Kmole of water at 100°C is injected in the compressed air which is compressed from 1 Kmole of air at 20°C and 1 atm and 60% relative humidity.

Fig. 2 is a graph similar to Fig. 1 except that the amount of water injected is 0.175 Kmole; and,

Figs. 3 and 4 are schematic block diagram of preferred embodiments according to the present invention.

In Figs. 1 and 2, the latent line indicates the critical temperature where water is transformed into steam completely. In Fig. 1, the air temperature at the first-step and the second-step of output of compressor wherein the adiabatic compression efficiency is, for example, between 0.90 - 0.85 becomes 140 - 170°C at 3 ata, and 290 - 340°C at 9 ata.

From Fig. 1, the increase in Anergy when 0.1 Kmole of water is mixed with above-mentioned air becomes to be 80 - 120 Kcal/Kmole, Dry Air at 3 ata, and 220 - 290 Kcal/Kmole, Dry Air at 9 ata. Similarly, the increase in Anergy when 0.175 Kmole of water is added becomes 80 - 120 Kcal/Kmole, Air at 3 ata, and 250 - 340 Kcal/Kmole at 9 ata.

Thus, the improvement in cycle efficiency can not be obtained by the mere addition of water even though work for compressing water can be considered approximately zero and the temperature range of heat recovery extends due to the significant increase in Anergy.

However, the Figs. 1 and 2 also show that the increase in Anergy upon the injection of water can be lowered in case of preferred operating condition wherein a multi-step compressor is provided and the rise in compressed gas temperature is restricted by intermediate cooling or both intermediate cooling and injection of water on contact of water even in the turbo compressor, for example, in which adiabatic compression of air in mist flow is recognized to be difficult. Let us consider, for example, the case wherein 0.175 Kmole of water is mixed in the 2 step-compression system. Firstly, the first-step compressed gas in subjected to intermediate cooling and a part of the water is added at this stage, and then the gas with water is compressed again in the compressor and after that the remainder of the water is added to the compressed gas so that a total of 0.175 Kmole of water is added to the gas. Assuming that the adiabatic efficiency of the compressor is 0.9 and rises in pressure at first-step and second-step compression are 3.2 ata and 9 ata, respectively, the increase of Anergy during injection of water are 35 Kcal/Kmole, Dry Air for the intermediate cooling, 20 Kcal/Kmole, Dry Air for the first-step of water injection and 80 Kcal/Kmole, Dry Air for the second step water injection, and therefore the total of increased Anergy is up to 135 Kcal/Kmole, Dry Air. This value is approximately half of the 250 Kcal/Kmole, Dry Air that is obtained by mere injection of water with the same adiabatic efficiency of the compressor, i.e. $\eta c=0.9$. Thus, the increase of Anergy during the injection of water or the degree of irreversibility is largely dependent on the injecting conditions.

This is the first feature of the present invention wherein compression is conducted by multi-step compression and the temperature of the working medium is restricted up to 250°C, preferably to 200°C, by means of injecting water.

It will be understood that the thermal efficiency is further improved if the principle of above-mentioned first features of the present invention is applied to the system wherein heat recovery is performed by compressed gaseous fuel or mixture of fuel/water/steam which is obtained by adding water to gaseous or the liquid phase volatile fuel.

It is well known that work for compression of the compressor depends on the so-called PV value, so cooling of absorption air or intermediate cooling is conducted for the above reason.

As an intermediate cooling, there are some methods such as heat exchange from cooling medium which is obtained by means of so-called cooling tower or the like, or injection of water. This conventional method using the cooling medium is superior to the other conventional method from the view point of decrease in work for compression of the compressor. However, it is necessary to supplement the heat by some heat recovery since in such system part of the heat is discharged from the system, and therefore such system is recognized to be unsatisfactory. Furthermore, although the injection of water is easy to perform, the PV value can not reach down to the desired value due to the increase of steam.

The preferred embodiment of the present invention can compensate the demerits of the above two conventional methods. Thus, discharge of heat out of the system is avoided by intermediate step pre-cooling by injecting or contacting with water, and thereby the amount of recovered heat is decreased. This permits the mean temperature difference of the heat exchanger to increase. Further, since water is injected into or brought into contact with pre-cooled compressed gas, the increase of Anergy during the injection of water is largely decreased in comparison with the mere addition of water, and since the amount of water to be injected is decreased a lower PV value can be obtained.

Considering such factors as the decrease of work for the compressor due to the above-mentioned PV value, maintenance of practical difference of temperature of the heat exchanger and the amount of latent heat of steam in the exhaust gas which is to be discharged to the atmosphere, the amount of water to be added or brought into contact is less than 0.3 Kmole, preferably 0.1 - 0.3 Kmole, and more preferably 0.15 - 0.25, per 1 Kmole of absorption air.

Now, we will explain the present invention on the basis of an embodiment wherein the above-mentioned theory is applied embodically to the gas turbine cycle.

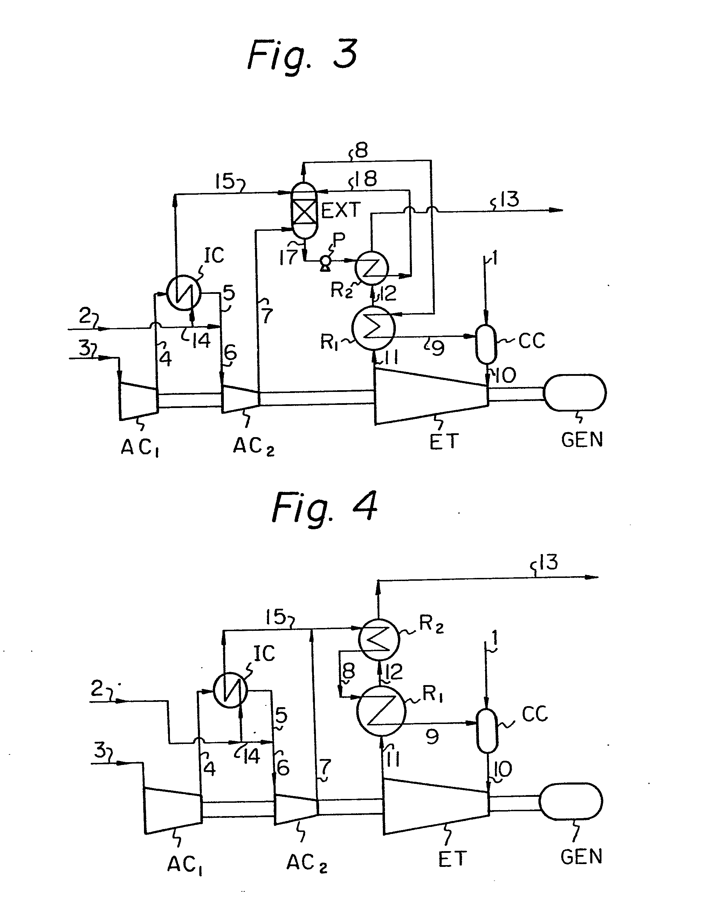

Fig. 3 is a schematic block diagram of the present invention comprising two-step heat recovery, one-step intermediate cooling means, one-step cooling tower under pressured, two-step air compression and one-step turbine;

Fig. 4 is similar to Fig. 3 except that the regenerator R2 and the pressure cooling tower EXT are replaced by a regenerator R2 in which heat recovery is carried out by multi-phase mixture.

Referring to Fig. 3, air is admitted to the first air compressor AC1 through absorbing conduit 3 and is compressed adiabatically, causing the temperature and the pressure thereof to rise, and then the air is discharged from the outlet conduit 4 as an intermediate-step compressed air. Water under pressure is introduced through conduit 2 and the main part of the water is preheated in an intermediate cooler IC and then is poured into a cooling tower under pressured EXT through a conduit 15 so that it acts as a supplement of liquid phase water therein. Liquid phase water which is subjected to the heat recovery at lower or intermediate thermal level in the regenerator R2 is circulated with the cooling tower EXT. The remainder of the water which is provided through the conduit 2 is injected through the conduit 14 into the intermediate compressed air 6 which is subjected to the intermediate cooling. Injection of water is conducted by either a method wherein water is mixed and evaporated in a mixing chamber and then is injected or a method wherein water is injected into conduit 6 directly. In either method, evaporation of water and fall of air temperature occur upon the injection of water. Air into which water is injected is admitted to the second-step air compressor AC2 through an absorbing conduit 6. In this stage, it is preferable that there be no liquid phase water. Air compressed adiabatically in the second-step air compressor AC2 is passed through the conduit 7 and is mixed within the cooling tower under pressured EXT with water from both the intermediate cooler IC and the regenerator R2 and thereafter is introduced into the first regenerator R1 through conduit 8. In the regenerator R1, heat recovery is carried out by means of sensible heat transfer with rising of temperature when liquid phase water does not exist at the compressed air side thereof, and heat recovery is carried out by means of both latent heat transfer with evaporation of water and sensible heat transfer with rising of air temperature when liquid phase water coexists with air. Compressed air which is subjected to the heat recovery by the regenerator R1 is introduced into the combustion chamber CC through a conduit 9. Fuel is provided with the combustion chamber CC through the conduit 1 and the compressed air functions as a working medium gas such as combustion supporting medium, refrigerant, diluent or the like. Therefore, the compressed air is heated to the predetermined temperature by combustion of fuel and then is admitted to an extension turbine ET through a conduit 10. In the turbine, the gas expands adiabatically and produces work, a part of which is adapted to be consumed in the first-step and second-step air compressor AC1 and AC2, and the remainder of which is adapted to be recovered as the driving force of a generator GEN. Gas from the turbine ET is admitted to the regenerator R1 through the conduit 11 and is subjected to the heat recovery at high thermal level. After that the gas is subjected to the heat recovery at lower and intermediate thermal levels in the regenerator R2. Waste gas from which heat recovery is carried out is discharged to atmosphere through a conduit 13.

As described above, the present invention relates to a heat exchanging system or a method for heat recovery wherein heat recovery is performed by means of mixture of air/steam or air/water/steam which is obtained by adding liquid phase water to compressed air or gas including air as the main part thereof which acts as a combustion supporting medium, working medium gas or the like. Further, the features of the present invention reside in the point that air/steam mixture or air/water/steam mixture is produced through specific procedures. It is apparent that the present invention can also be applied to the associated teckniques well known to those skilled in the art such as the cooling of absorption air, the cooling of exhaust gas, the use of the part of gaseous mixture as cooling medium for cycle apparatus, application to the open gas turbine cycle such as a various type of reheat cycles, parallel use with the other heat exchanging system using the other heat sources, and use of water including non-volatile material such as sodium.

Table 1 gives some data on the thermal efficiency of the heat exchanging system according to the present invention described in Fig. 3.

<u>Table 1</u>

| | | | |
|---|---|---|---|
| air | temperature of air at inlet | 20 | °C |
| | flow of dry air | 1.00 | Kgmol/sec |
| | flow of steam | 0.0151 | " |
| water for addition | temperature at inlet | 20 | °C |
| | temperature at mixing | 135 | " |
| | flow at 1st step | 0.0369 | Kgmol/sec |
| | flow at 2nd step | 0.1131 | " |
| | total flow for addition | 9.73 | T/H |
| opera-tion | pressure of turbine at inlet | 9 | ata |
| | temperature of turbine at inlet | 1000 | °C |
| waste gas | temperature | 107 | °C |
| | flow | 1.1811 | Kgmol/sec |
| fuel and output | fuel (heavy oil A) | 0.500 | Kg/sec |
| | output | 10700 | KWH/H |

$$\text{efficiency of cycle} = \frac{10700 \times 860 \times 100}{0.500 \times 10860 \times 3600} = 47.0\%$$

0051493

- 10 -

We claim:

1. A heat exchanging system for a heat engine wherein compressed air or gas including air as the main part thereof is used as combustion supporting gas, working medium gas or the like and heat recovery is carried out by means of mixture which is obtained by adding liquid phase water to the compressed air or the gas including air as the main part thereof, the heat exchanging system for the open internal combustion cycle comprising:

a multi-step air compressor;

intermediate cooling means, or both intermediate cooling means and water injecting means or water contacting means located at the intermediate output of the air compressor; and

liquid phase water injecting means or contacting means located at the last-step output of the air compressor;

the heat exchanging system for the open internal combustion cycle being characterized in that the liquid phase water which is mixed with the compressed gas by means of the injecting means or contacting means is used as intermediate cooling heat medium, or both intermediate cooling heat medium and water to be injected to the intermediate compressed air.

2. The system of Claim 1 wherein the open internal combustion cycle is a gas turbine cycle.

3. The system of Claim 1 wherein the amount of liquid phase water for injection is 0.1 - 0.3 Kmole per 1 Kmole of absorption air.

4. The system of Claim 1 wherein the mixture of the compressed air and the liquid phase water is a multi-phase mixture of air/steam/water.

5. The system of Claim 1 wherein the temperature of intermediate compressed air or compressed air at each output of the air compressor is 250°C or less.

6. The system of Claim 1 wherein compressed gaseous fuel or volatile liquid fuel is used as fuel and heat recovery is accomplished by means of steam or a mixture of water/steam which is obtained by adding water to the fuel or contacting water with the fuel.

7.     The system of Claim 1 wherein water for injection or contact is also used as heat recovering medium for the turbine exhaust gas.

# Fig. 1

# Fig. 2

# Fig. 3

# Fig. 4